# FASCICULE DE BREVET EUROPEEN

(11) **EP 3 792 127 B1**
(45) Date de publication et mention de la délivrance du brevet: **05.07.2023**
(21) Numéro de dépôt: 20191551.9
(22) Date de dépôt: 18.08.2020
(51) Int. Cl.: B60W 30/18, B60W 40/09, B60W 60/00, B60W 50/00, B60W 50/14

(54) **PROCÉDÉ POUR AIDER AU CHOIX DU POSITIONNEMENT D'UN VÉHICULE SUR UNE ROUTE COMPRENANT UNE PLURALITÉ DE VOIES DE CIRCULATION**
VERFAHREN ZUR UNTERSTÜTZUNG BEI DER WAHL DER POSITIONIERUNG EINES FAHRZEUGS AUF EINER STRASSE MIT EINER VIELZAHL VON FAHRSPUREN
METHOD FOR ASSISTING THE CHOICE OF POSITIONING OF A VEHICLE ON A ROAD COMPRISING A PLURALITY OF LANES

(30) Priorité: 12.09.2019 FR 1910033
(43) Date de publication de la demande: 17.03.2021
(73) Titulaire: Renault s.a.s, 92100 Boulogne Billancourt (FR)
(72) Inventeur: GODELLE, Jérôme, 27500 Manneville sur Risle (FR); SCHMITT, Thierry, 78270 BENNECOURT (FR)
(74) Mandataire: Renault Group

(56) Documents cités:
- DE-A1-102015 205 133
- US-A1- 2017 320 521
- US-B1- 9 672 734

## Description

L'invention concerne le domaine des aides à la conduite.

Il est connu de l'état de la technique, par exemple dans les documents DE102015205133 ou US9672734, des systèmes adaptés pour proposer à un conducteur de véhicule l'itinéraire le plus adapté pour se rendre à une destination prédéfinie, en fonction de préférences du conducteur, des types de route, du type de véhicule, du trafic routier, de la consommation du véhicule. Un tel système signale au conducteur les changements de voies de circulation à effectuer pour suivre ledit itinéraire.

Les critères de courtoisie ne sont pas pris en compte par les systèmes d'aides à la conduite de l'état de la technique. Les changements de voies de circulation proposés le sont, lorsque l'itinéraire le requiert, par exemple pour changer de route ou bien pour rester sur une route prédéterminée et ne pas se retrouver sur une voie menant à une sortie de ladite route.

L'invention vise à résoudre le problème susmentionné de l'état de la technique.

L'invention porte sur un procédé pour aider au choix du positionnement d'un véhicule suivant un itinéraire principal sur une route, la route comprenant au moins un tronçon de route comportant une pluralité de voies de circulation de même sens de circulation, le véhicule comprenant un calculateur, le procédé comprenant les étapes suivantes :
- une étape d'identification dans laquelle le calculateur identifie sur le tronçon de route, une portion de route à choix multiple de positionnements, des positionnements étant chacun associés à des voies de circulation distinctes permettant de suivre l'itinéraire principal, un des positionnements étant associé à une voie de circulation permettant en outre de suivre un itinéraire alternatif, la route comprenant une zone de transition adjacente à la portion de route à choix multiple de positionnements, dans laquelle un changement de voie de circulation du véhicule est autorisé,
- une étape de détermination dans laquelle le calculateur localise le véhicule par rapport à la zone de transition et détermine en fonction d'une localisation du véhicule par rapport à la zone de transition, si un changement de voie de circulation du véhicule dans la zone de transition est possible,
- une étape d'information dans laquelle, si un changement de voie de circulation du véhicule dans la zone de transition est possible, le calculateur informe un pilote du véhicule que plusieurs positionnements sont possibles, un positionnement préféré parmi les positionnements possibles permettant de laisser libre le positionnement permettant en outre de suivre un itinéraire alternatif, le calculateur n'informant pas le pilote du véhicule que plusieurs positionnements sont possibles, sinon.

Selon un aspect de l'invention, le calculateur n'informe le pilote que pour les positionnements associés à une voie de circulation du véhicule et aux voies de circulation adjacentes à ladite voie de circulation du véhicule.

La voie de circulation du véhicule est la voie de circulation sur laquelle le véhicule est localisé.

Selon un aspect de l'invention, la zone de transition est délimitée par une entrée et une sortie selon le sens de circulation, un changement de voie de circulation du véhicule dans la zone de transition étant possible après franchissement du véhicule de l'entrée de la zone de transition, et à une distance de sortie du véhicule par rapport à la sortie de la zone de transition, supérieure à un seuil limite de changement prédéfini, le changement de voie de circulation du véhicule n'étant pas possible sinon.

Selon un aspect de l'invention, le calculateur est apte à détecter des cibles localisées dans l'environnement du véhicule, le calculateur prenant en outre en compte des cibles détectées pour déterminer si un changement de voie de circulation du véhicule dans la zone de transition est possible, selon l'étape de détermination.

Selon un aspect de l'invention, chaque positionnement est associé à une note de courtoisie, un positionnement permettant de suivre uniquement l'itinéraire principal ayant une note de courtoisie supérieure au positionnement permettant en outre de suivre un itinéraire alternatif, le positionnement préféré étant le positionnement dont la note de courtoisie est la plus haute.

Selon un aspect de l'invention, la note de courtoisie associée à un positionnement est en outre pondérée à la baisse lorsque ledit positionnement engendre un changement de voie de circulation du véhicule.

Selon un aspect de l'invention, le calculateur est apte à détecter des cibles localisées dans l'environnement du véhicule, la note de courtoisie associée à un positionnement permettant en outre de suivre un itinéraire alternatif étant pondérée à la baisse lorsque le calculateur détecte, dans l'environnement du véhicule, une cible signalant une intention de suivre ledit itinéraire alternatif.

Selon un aspect de l'invention, les étapes d'identification, de détermination et d'information sont exécutées plusieurs fois. Le procédé comprend en outre une étape de restitution, dans laquelle le calculateur, en fonction des informations faites au pilote du véhicule au cours des étapes d'information, des positionnements adoptés par le pilote du véhicule à l'issue des étapes d'information et des notes de courtoisie associées audit positionnements adoptés, calcule un score de courtoisie et restitue ledit score de courtoisie au pilote du véhicule.

L'invention porte également sur un produit programme d'ordinateur comprenant les instructions de programme mettant en oeuvre les étapes du procédé pour aider au choix du positionnement d'un véhicule, lorsque les instructions de programme sont exécutées par un ordinateur.

L'invention porte également sur un support lisible d'informations sur lequel est mémorisé le produit programme d'ordinateur.

D'autres avantages et caractéristiques de l'invention apparaîtront à la lecture de la description et des dessins.

La figure 1 représente un véhicule circulant sur une route, comportant un calculateur apte à exécuter le procédé selon l'invention.
La figure 2 illustre des étapes du procédé selon l'invention.
La figure 3a représente un premier scénario d'environnement routier, associé à des notes de courtoisie relative à des positionnements de véhicule.
La figure 3b représente un second scénario d'environnement routier, associé à des notes de courtoisie relative à des positionnements de véhicule.

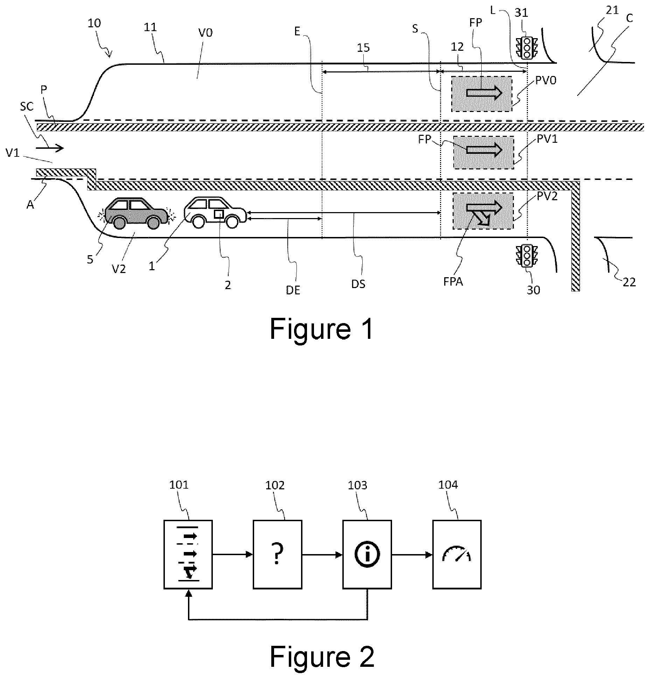

La figure 1 illustre une route 10 de sens de circulation SC sur laquelle circule un véhicule 1 et une cible 5.

La route 10 comprend des feux de circulation 30, 31 localisés à un carrefour C entre ladite route 10 qui est une route principale, une première route secondaire 21 et une deuxième route secondaire 22

Le véhicule 1 comprend un calculateur 2.

Le véhicule 1 suit un itinéraire principal P correspondant à rester sur la route 10, c'est-à-dire aller tout droit après les feux de circulation 30, 31.

La cible 5 suit un itinéraire alternatif A correspondant à prendre la deuxième route secondaire 22, c'est-à-dire tourner à droite après les feux de circulation 30, 31. Sur la figure 1, la cible 5 signale son intention de tourner à droite par une activation de ses feux clignotants de droite.

La cible 5 est positionnée derrière le véhicule 1, selon le sens de circulation SC.

La route 10 comprend un tronçon de route 11 comportant une pluralité de voies de circulation V0, V1, V2 distinctes : une voie de circulation de gauche V0, une voie de circulation centrale V1, une voie de circulation de droite V2.

Le véhicule 1 et la cible 5 circulent sur la voie de circulation V2 de droite selon la sens de circulation SC.

En amont dudit tronçon de route 11, la route 10 comprend uniquement la voie de circulation centrale V1.

Les feux de circulation 30, 31 comportent au moins deux états :
- un état passant qui est souvent indiqué par un signal lumineux de couleur verte,
- un état bloqué qui est souvent indiqué par un signal lumineux de couleur rouge.

Lorsque les feux de circulation 30, 31 sont dans l'état passant, les véhicules circulant sur la route 10 sont autorisés à franchir le carrefour C, c'est à dire à rouler au-delà de la limite représentée par une ligne droite virtuelle L passant par les deux feux de circulation 30, 31.

Lorsque les feux de circulation 30, 31 sont dans l'état bloqué, les véhicules circulant sur la route 10 ne sont pas autorisés à franchir le carrefour C, c'est à dire à rouler au-delà de la limite représentée par la ligne droite virtuelle L passant par les deux feux de circulation 30, 31.

Le feu de circulation 30 qui est localisé au niveau de la voie de circulation V2 de droite, comprend en outre un état passant sélectif. L'état passant sélectif est souvent indiqué par un signal lumineux de couleur verte ou orange, parfois clignotant, et souvent en forme de flèche.

Lorsque le feu de circulation 30 est dans l'état passant sélectif, seuls les véhicules circulant sur la route 10 et suivant l'itinéraire alternatif A sont autorisés à franchir le carrefour C, pour tourner à droite en direction de la deuxième route secondaire 22.

Le tronçon de route 11 comprend une portion de route 12 à choix multiple de positionnements, des positionnements PV0, PV1, PV2 étant chacun associés respectivement aux voies de circulation V0, V1, V2 de la route 10, et permettant tous de suivre l'itinéraire principal P.

Sur la figure 1, la portion de route 12 est limitrophe au carrefour C. La frontière commune à la portion de route 12 et au carrefour C est la ligne virtuelle L passant par les deux feux de circulation 30, 31.

Selon la figure 1, le positionnement PV2 associé la voie de circulation V2 de droite permet en outre de suivre l'itinéraire alternatif A, c'est-à-dire de tourner à droite en direction de la deuxième route secondaire 22.

Des flèches directionnelles FP, FPA sont représentées au sol sur la portion de route 12 à choix multiple de positionnements, pour indiquer aux véhicules une affectation à chacune des voies de circulation V0, V1, V2 d'une ou deux directions.

Sur chacune des voies de circulation de gauche V0 et centrale V1, une flèche unidirectionnelle FP de continuité tout droit est représentée au sol, pour indiquer une affectation de direction de continuité tout droit après les feux de circulation 30, 31.

Sur la voie de circulation de droite V2, une flèche bidirectionnelle FPA de continuité tout droit et tourne-à-droite est représentée au sol, pour indiquer une double affectation d'une direction de continuité tout droit après les feux de circulation 30, 31 et d'une direction à droite après les feux de circulation 30, 31.

La route 10 comprend en outre une zone de transition 15, adjacente à la portion de route 12 à choix multiple de positionnements. Dans la zone de transition 15, un changement de voie de circulation du véhicule 1 est autorisé. Sur la portion de route 12 à choix multiple de positionnements, un changement de voie de circulation n'est pas autorisé. L'autorisation ou l'interdiction de changer de voie de circulation est déterminée pour la bonne exécution du procédé selon l'invention. Ce n'est pas une autorisation légale issue du code de la route.

La zone de transition 15 est délimitée par une entrée E et une sortie S, selon le sens de circulation SC de la route 1. L'entrée E est la délimitation de la zone de transition 15 que le véhicule 1 franchit en premier lorsqu'il circule sur la route 10 dans le sens de circulation SC, c'est-à-dire en entrant dans la zone de transition 15. La sortie S est la délimitation de la zone de transition 15 que le véhicule 1 franchit en dernier lorsqu'il circule sur la route 10, c'est-à-dire en sortant de la zone de transition 15. La sortie S est la frontière entre la zone de transition 15 et la portion de route 12 à choix multiple de positionnements.

Le véhicule 1 est positionné sur la voie de circulation V2 de droite à une distance d'entrée DE de l'entrée E de la zone de transition 15 et à une distance de sortie DS de la sortie S de la zone de transition 15.

Avantageusement, la longueur de la zone de transition 15, c'est-à-dire la distance entre la sortie S et l'entrée E de la zone de transition 15 est comprise entre 100 et 500 mètres.

Une zone de transition 15 trop courte pourrait conduire à ce que le véhicule 1 termine sa manoeuvre sur la portion de route 12 à choix multiple de positionnements, ce qui est interdit.

Une zone de transition 15 trop longue pourrait conduire à un changement de voie trop anticipé, ne garantissant pas la bonne exécution du procédé. Par exemple, un changement de l'environnement du véhicule 1 pourrait inciter le véhicule 1 à de nouveau changer de voie de circulation. Il n'est pas souhaitable qu'un véhicule fasse trop de changements de voie de circulation sur une courte distance.

Avantageusement, la longueur de la portion de route 12 à choix multiple de positionnements, est comprise entre 10 et 100 mètres. La longueur de la portion de route 12 à choix multiple de positionnements correspond à la distance entre la sortie S de la zone de transition et la ligne virtuelle L passant par les deux feux de circulation 30, 31.

Selon le scénario de la figure 1, si le véhicule 1, circulant sur la route 10 et suivant l'itinéraire principal P, reste sur la voie de circulation V2 de droite, le véhicule 1 sera sur le positionnement PV2 lorsqu'il atteindra la portion de route 12 à choix multiple de positionnements. Si le feu de circulation 30 localisé au niveau de la voie de circulation V2 est dans l'état passant sélectif lorsque le véhicule 1 est localisé sur le positionnement PV2, alors le véhicule 1 doit s'arrêter et ne pas franchir le carrefour C. La cible 5, toujours positionnée derrière le véhicule 1 et suivant l'itinéraire alternatif A, est autorisée à franchir le carrefour C, pour tourner à droite en direction de la deuxième route secondaire 22. Cependant, la cible 5 est gênée par le véhicule 1 à l'arrêt et ne peut donc pas franchir le carrefour C. La cible 5 doit attendre que le feu de circulation 30 localisé au niveau de la voie de circulation V2 passe à l'état passant, puis que le véhicule 1 franchisse le carrefour C, afin que la cible 5 puisse à son tour franchir la carrefour C.

Un conducteur du véhicule 1, courtois et attentif, aurait changé de voie de circulation pour se positionner sur le positionnement PV1 associé à la voie de circulation centrale V1 ou sur le positionnement PV0 associé à la voie de circulation de gauche V0, pour laisser libre le positionnement PV2 associé à la voie de circulation V2, afin que la cible 5 puisse l'occuper. Ainsi, la cible 5 aurait pu suivre l'itinéraire alternatif A en franchissant le carrefour C pour prendre la deuxième route secondaire 22 sur un état passant sélectif du feu de circulation 30 localisé au niveau de la voie de circulation V2, sans être gênée par le véhicule 1.

Le procédé décrit sur la figure 2 permet d'aider un conducteur au choix de positionnement d'un véhicule à l'approche d'une portion de route 12 à choix multiple de positionnements, pour éviter le scénario gênant décrit ci-dessus, un conducteur n'ayant pas toujours la charge cognitive disponible pour effectuer le choix le plus courtois vis-à-vis d'un véhicule cible 5.

La figure 2 illustre un procédé pour aider au choix du positionnement d'un véhicule 1 suivant un itinéraire principal P sur une route 10, la route 10 comprenant au moins un tronçon de route 11 comportant une pluralité de voies de circulation V0, V1, V2 de même sens de circulation SC, le véhicule 1 comprenant un calculateur 2.

Selon une étape d'identification 101, le calculateur 2 identifie sur le tronçon de route 11, une portion de route 12 à choix multiple de positionnements, des positionnements PV0, PV1, PV2 étant chacun associés à des voies de circulation V0, V1, V2 distinctes permettant de suivre l'itinéraire principal P, un des positionnements étant associé à une voie de circulation V2 permettant en outre de suivre un itinéraire alternatif A, la route 10 comprenant une zone de transition 15 adjacente à la portion de route 12 à choix multiple de positionnements, dans laquelle un changement de voie de circulation du véhicule 1 est autorisé.

La zone de transition 15 est située en amont de la portion de route 12 à choix multiple de positionnements, selon le sens de circulation D de la route 10.

Selon un premier mode de réalisation, le calculateur 2 interroge une cartographie pour identifier une portion de route 12 à choix multiple de positionnements, la cartographie comportant des portions de route 12 à choix multiple de positionnements identifiables par leur position géographique.

Selon un deuxième mode de réalisation, le calculateur 2 identifie la portion de route 12 à choix multiple de positionnements par l'intermédiaire d'un ou plusieurs capteurs embarqués sur le véhicule, le ou les capteurs étant en particulier aptes à reconnaître des flèches directionnelles associées à des voies de circulation, lesdites flèches directionnelles étant représentées au sol sur la route 10 par des marquages au sol ou étant représentées sur des panneaux routiers.

Par exemple, une caméra embarquée sur le véhicule 1 détecte, comme représenté sur la figure 1, des feux de circulation 30, 31 localisés à un carrefour C sur le tronçon de route 11 de la route 10 sur laquelle le véhicule 1 circule. La caméra détecte des lignes de séparation de voies de circulation, en déduisant que le tronçon de route 11 comprend trois voies de circulation V0, V1, V2. Sur chacune des voies de circulation de gauche V0 et centrale V1, une flèche unidirectionnelle FP de continuité tout droit représentée au sol est détectée par la caméra. Sur la voie de circulation de droite V2, une flèche bidirectionnelle FPA de continuité tout droit et tourne-à-droite représentée au sol est détectée par la caméra. Le calculateur 2 du véhicule en déduit à partir des données de la caméra qu'une portion de route 12 à choix multiple de positionnements est localisée dans l'environnement du véhicule 1.

Selon un troisième mode de réalisation, une infrastructure routière de l'environnement du véhicule 1 envoie un signal apte à être réceptionné par le calculateur 2 du véhicule 1 lors de son passage à proximité de ladite infrastructure routière, le signal informant de la présence d'une portion de route 12 à choix multiple de positionnements dans ledit environnement dudit véhicule 1. Un feu de circulation 30, 31, ou une borne routière localisée en bord de route, peut être apte à envoyer un tel signal.

Selon un quatrième mode de réalisation, suite à une communication entre le véhicule 1 et un véhicule tiers, le calculateur 2 est informé de la présence d'une portion de route 12 à choix multiple de positionnements dans l'environnement dudit véhicule 1, le véhicule tiers étant apte à envoyer au calculateur 2 du véhicule 1 une information sur des portions de route 12 à choix multiple de positionnements. Par exemple, un véhicule tiers circulant à proximité du véhicule 1 peut envoyer une telle information, le véhicule tiers pouvant circuler dans le même sens de circulation SC que le véhicule 1 ou dans un sens de circulation opposé.

Selon une étape de détermination 102, le calculateur 2 :
- localise le véhicule 1 par rapport à la zone de transition 15, puis
- détermine, en fonction d'une localisation du véhicule 1 par rapport à la zone de transition 15, si un changement de voie de circulation du véhicule 1 dans la zone de transition 15 est possible.

Selon un premier exemple de réalisation, le calculateur 2 connait la position géographique du véhicule 1, par exemple par l'intermédiaire d'un système de géolocalisation présent dans ledit véhicule 1. Le calculateur 2 récupère des informations sur la position géographique de la zone de transition 15, de manière absolue, c'est-à-dire selon des coordonnées géographiques dont le référentiel est fixe par rapport à la route 10. A partir de la position géographique absolue de la zone de transition 15 et de la position géographique du véhicule 1, le calculateur 2 est capable de localiser le véhicule 1 par rapport à la zone de transition 15.

Selon un deuxième exemple de réalisation, le calculateur 2 récupère des informations sur la position géographique de la zone de transition 15, de manière relative, c'est-à-dire par rapport au véhicule 1.

La zone de transition 15 est délimitée, comme illustré sur la figure 1, par une entrée E et une sortie S.

De manière avantageuse, pour localiser le véhicule 1 par rapport à la zone de transition 15, le calculateur 2 détermine ou récupère directement, une distance d'entrée DE entre le véhicule 1 et l'entrée E de la zone de transition 15 ainsi qu'une distance de sortie DS entre le véhicule 1 et la sortie S de la zone de transition 15.

La distance d'entrée DE entre le véhicule 1 et l'entrée E de la zone de transition 15 est définie positive lorsque le véhicule est en amont de la zone de transition 15, en particulier en amont de l'entrée E selon le sens de circulation SC, c'est-à-dire lorsque le véhicule n'a pas franchi l'entrée E de la zone de transition 15.

La distance de sortie DS entre le véhicule 1 et la sortie S de la zone de transition 15 est définie positive lorsque le véhicule est en amont de la zone de transition 15 ou dans la zone de transition 15, c'est-à-dire en amont de la sortie S selon le sens de circulation SC. La distance de sortie DS est positive tant que le véhicule n'a pas franchi la sortie S de la zone de transition 15.

Selon le premier mode de réalisation, la cartographie indique la position géographique de la zone de transition 15, en particulier la position géographique des délimitations d'entrée E et de sortie S de la zone de transition 15. Le calculateur 2, connaissant la position géographique du véhicule 1, est apte à calculer la distance d'entrée DE ainsi que la distance de sortie DS.

Selon le deuxième mode de réalisation, le ou les capteurs peuvent directement fournir les distances d'entrée DE et de sortie DS du véhicule 1 aux entrée E et sortie S de la zone de transition 15, ou bien le calculateur 2 peut les calculer à partir de données brutes fournies par le ou les capteurs.

En reprenant l'exemple de la caméra embarquée sur le véhicule 1, le calculateur 2 reconnait, à partir des données de ladite caméra, une portion de route 12 à choix multiple de positionnement délimitant un carrefour C par des feux de circulation 30, 31. Selon des paramètres par exemple enregistrés dans le calculateur 2, l'entrée E de la zone de transition 15 est définie comme étant à une première distance prédéterminée de la ligne droite virtuelle L passant par les deux feux de circulation 30, 31, et la sortie S de la zone de transition 15 est définie comme étant à une deuxième distance prédéterminée de la ligne droite virtuelle L passant par les deux feux de circulation 30, 31. Le véhicule 1 comprend en outre un capteur de distance capable de mesurer la distance entre le véhicule 1 et les feux de circulation 30, 31 ou la ligne droite virtuelle L passant par les deux feux de circulation 30, 31. Le capteur de distance est par exemple une caméra intelligente, un radar ou un lidar. La mesure de la distance entre le véhicule 1 et les feux de circulation 30, 31 ou la ligne droite virtuelle L passant par les deux feux de circulation 30, 31 peut être déterminée à partir d'une information d'un capteur ou à partir de la fusion d'informations venant de plusieurs capteurs.

A partir des données du capteur de distance et des paramètres de première et deuxième distance prédéterminée, le calculateur 2 est ainsi apte à calculer la distance d'entrée DE entre le véhicule 1 et l'entrée E de la zone de transition 15 ainsi que la distance de sortie DS entre le véhicule 1 et la sortie S de la zone de transition 15. La distance d'entrée DE est égale à la distance du véhicule 1 aux feux de circulation 30, 31 à laquelle est soustraite la première distance prédéterminée. La distance de sortie est égale à la distance du véhicule 1 aux feux de circulation 30, 31 à laquelle est soustraite la deuxième distance prédéterminée.

Alternativement, un capteur multifonction embarqué sur le véhicule 1 capable de mesurer des distances, reconnaître des marquages au sol et des feux de circulation, et comprenant une unité électronique capable de faire des calculs, est apte à fournir directement au calculateur 2 les distances d'entrée DE et de sortie DS.

Avantageusement, la première distance prédéterminée entre la ligne droite virtuelle L passant par les deux feux de circulation 30, 31 et l'entrée E de la zone de transition 15 est comprise entre 110 et 600 mètres.

Avantageusement, la deuxième distance prédéterminée entre la ligne droite virtuelle L passant par les deux feux de circulation 30, 31 et la sortie S de la zone de transition 15 est comprise entre 10 et 100 mètres.

Selon le troisième mode de réalisation, une borne routière envoie au calculateur 2 directement les distances d'entrée DE et de sortie DS au moment où le véhicule 1 passe au niveau de la borne, la borne routière connaissant sa distance par rapport aux entrée E et sortie S de la zone de transition 15, le véhicule 1 et la borne routière ayant sensiblement la même position géographique au moment où le véhicule 1 passe au niveau de la borne. Avantageusement la borne routière est localisée au niveau de l'entrée E de la zone de transition 15 et ne fournit que la distance de sortie DS, la distance d'entrée DE étant égale à zéro.

Si la présence d'une zone de transition 15 est signifiée par un feu de circulation 30 localisé au carrefour C limitrophe de ladite zone de transition 15, c'est avantageusement la position géographique des délimitations d'entrée E et de sortie S de la zone de transition 15 qui est envoyée au calculateur 2. Alternativement, le feu de circulation 30 peut envoyer sa position géographique absolue au calculateur 2, permettant au calculateur 2 d'en déduire la position géographique des délimitations d'entrée E et de sortie S de la zone de transition 15 à partir de paramètres enregistrés dans le calculateur 2, tel que décrit dans le deuxième mode de réalisation, avec l'exemple de la caméra embarquée.

Selon le quatrième mode de réalisation, un véhicule tiers circulant dans le sens de circulation opposé par rapport au sens de circulation SC, fournit directement les distances d'entrée DE et de sortie DS au moment où le véhicule tiers croise le véhicule 1 puisque les deux véhicules ont sensiblement la même position géographique au moment du croisement. Alternativement, le véhicule tiers fournit la position géographique absolue des délimitations d'entrée E et de sortie S de la zone de transition 15, préalablement récupérée par exemple selon le premier exemple de réalisation.

Un véhicule tiers circulant dans le même sens de circulation que le véhicule 1 fournit avantageusement la position géographique des délimitations d'entrée E et de sortie S de la zone de transition 15. Il est cependant possible au véhicule tiers d'envoyer ses propres distances aux entrée E et sortie S de la zone de transition 15, le calculateur 2 en déduisant les distances d'entrée DE et de sortie DS du véhicule 1 à partir d'une estimation d'une distance inter-véhiculaire entre le véhicule 1 et le véhicule tiers.

Une fois les distances d'entrée DE et de sortie DS récupérées ou calculées à un instant de temps, le calculateur 2 est apte à les mettre à jour à un autre instant de temps, en fonction de la vitesse du véhicule 1 et/ou de sa position géographique.

Après avoir calculé ou récupéré la localisation du véhicule 1 par rapport à la zone de transition 15, en particulier après avoir déterminé la distance d'entrée DE du véhicule 1 par rapport à l'entrée E dans la zone de transition et la distance de sortie DS du véhicule 1 par rapport à la sortie S de la zone de transition 15, le calculateur 2 détermine, en fonction de ladite localisation du véhicule 1 par rapport à la zone de transition 15, si un changement de voie de circulation du véhicule 1 dans la zone de transition 15 est possible.

Un changement de voie de circulation du véhicule 1 dans la zone de transition 15 est possible après franchissement du véhicule 1 de l'entrée E de la zone de transition 15, et si la distance de sortie DS est supérieure à un seuil limite de changement prédéfini, le changement de voie de circulation du véhicule 1 n'étant pas possible sinon.

La condition de franchissement du véhicule 1 de l'entrée E de la zone de transition 15, correspond à une distance d'entrée DE négative.

La condition de distance de sortie DS du véhicule 1 par rapport à la sortie S de la zone de transition 15, supérieure à un seuil limite de changement prédéfini, correspond à une distance de sortie DS positive et supérieure au seuil limite de changement prédéfini.

Le seuil limite de changement est compris entre 30 et 200 mètres de préférence entre 70 et 90 mètres.

De manière préférentielle, le calculateur 2 est apte à détecter des cibles localisées dans l'environnement du véhicule 1. Par exemple, le véhicule 1 comprend un ou plusieurs capteurs embarqués qui, après un traitement de prises de vue ou de données de prises de vue du ou des capteurs, permettent au calculateur 2 de détecter des cibles de l'environnement véhicule.

Le calculateur 2 prend en outre avantageusement en compte lesdites cibles pour déterminer si un changement de voie de circulation du véhicule 1 dans la zone de transition 15 est possible. Par exemple, si une cible telle qu'un poids lourd est détectée sur une voie de circulation de la route 10, la présence rendant dangereux un changement de voie de circulation, alors le changement de voie de circulation du véhicule 1 sera considéré comme non possible par le calculateur 2 du véhicule 1.

Selon une étape d'information 103, si un changement de voie de circulation du véhicule 1 dans la zone de transition 15 est possible, le calculateur 2 informe un pilote du véhicule que plusieurs positionnements PV0, PV1, PV2 sont possibles, un positionnement préféré parmi les positionnements possibles permettant de laisser libre le positionnement PV2 permettant en outre de suivre un itinéraire alternatif, le calculateur 2 n'informant pas le pilote du véhicule que plusieurs positionnements PV0, PV1, PV2 sont possibles, sinon.

Le pilote du véhicule 1 est un conducteur humain ou un pilote automatique, c'est-à-dire une unité de commande du véhicule 1 apte conduire de manière automatique le véhicule 1.

Selon l'exemple illustré sur la figure 1, le positionnement PV2 associé à la voie de circulation de droite V2 doit être laissé libre pour permettre aux véhicules tel que la cible 5 de suivre l'itinéraire alternatif A. Le positionnement PV2 associé à la voie de circulation de droite V2 n'est donc pas un positionnement préféré. Les positionnements PV1 et PV0 associés aux voies de circulation centrale PV1 et gauche PV0 peuvent être des positionnements préférés car ils ne permettent pas de suivre un itinéraire alternatif A.

De manière avantageuse, chaque positionnement PV0, PV1, PV2 est associé à une note de courtoisie, un positionnement PV0, PV1 permettant de suivre uniquement l'itinéraire principal P ayant une note de courtoisie supérieure au positionnement PV2 permettant en outre de suivre un itinéraire alternatif A, le positionnement préféré étant le positionnement PV0, PV1, PV2 dont la note de courtoisie est la plus haute.

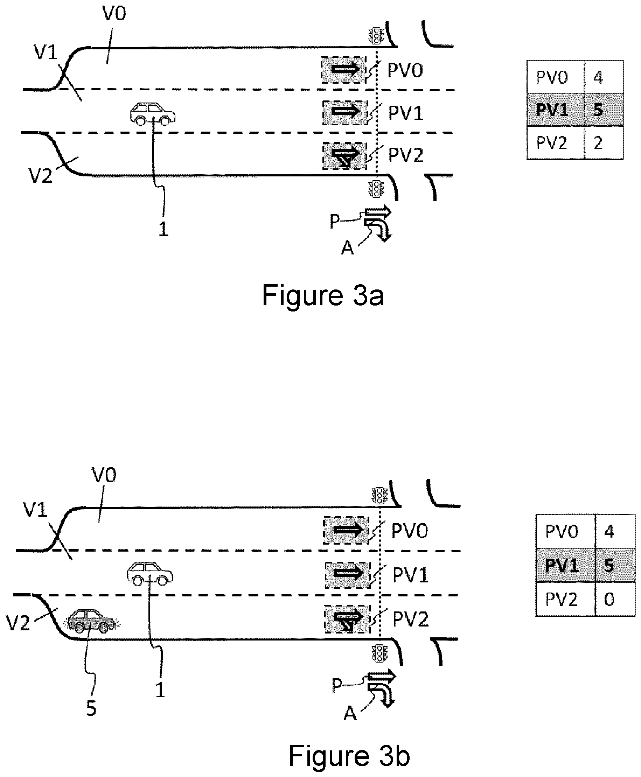

Les figures 3a et 3b représentent chacune un scénario de positionnement du véhicule 1 vis-à-vis d'un environnement véhicule, sur la même route que celle représentée sur la figure 1. Associé à chaque scénario, un tableau indique des exemples de notes de courtoisie associées aux différents positionnements PV0, PV1, PV2. Le positionnement préféré est mis en évidence dans les tableaux de notes de courtoisie par une coloration grise des cellules.

Avantageusement, une note de courtoisie associée à un positionnement PV0, PV1, PV2 est pondérée à la baisse lorsque ledit positionnement PV0, PV1, PV2 engendre un changement de voie de circulation du véhicule 1. Ainsi, comme illustré sur les figures 3a et 3b, la note de courtoisie du positionnement PV1 associé à la voie de circulation V1 centrale sur laquelle le véhicule 1 circule, est plus élevée que la note de courtoisie du positionnement PV0 associé à la voie de circulation V0 de gauche, bien que la voie de circulation V0 de gauche permette, tout comme la voie de circulation V1 centrale, de suivre uniquement l'itinéraire principal P.

Avantageusement, la note de courtoisie associée à un positionnement PV2 permettant en outre de suivre un itinéraire alternatif A est pondérée à la baisse lorsque le calculateur 2 détecte, dans l'environnement du véhicule 1, une cible 5 signalant une intention de suivre ledit itinéraire alternatif A. Ainsi, la note de courtoisie associée au positionnement PV2 permettant en outre de suivre un itinéraire alternatif A est de zéro sur la figure 3b sur laquelle est représentée une cible 5 signalant une intention de suivre ledit itinéraire alternatif A, alors que la note de courtoisie associée au positionnement PV2 permettant en outre de suivre un itinéraire alternatif A est de deux sur la figure 3a, sur laquelle seul le véhicule 1 est représenté.

En effet, selon un premier scénario représenté de la figure 3a, aucun véhicule ne signale une intention de suivre ledit itinéraire alternatif A. Il peut cependant être avantageux de laisser libre le positionnement PV2 permettant en outre de suivre un itinéraire alternatif A à des véhicules non encore détectés, parce-que non encore dans l'environnement immédiat du véhicule 1, mais qui voudraient suivre l'itinéraire alternatif A. C'est la raison pour laquelle la note de courtoisie associée au positionnement PV2 permettant en outre de suivre un itinéraire alternatif A est relativement basse, c'est de la courtoisie préventive.

Mais dans le cas où un véhicule a signalé une intention de suivre ledit itinéraire alternatif A, selon un second scénario représenté sur de la figure 3b, et que le véhicule 1 l'a identifié comme une cible 5, il y a une raison plus forte de laisser libre le positionnement PV2 permettant en outre de suivre un itinéraire alternatif A que selon le premier scénario. Il est donc avantageux que la note de courtoisie associée au positionnement PV2 permettant en outre de suivre un itinéraire alternatif A, soit plus élevée selon le premier scénario que selon le second scénario.

A l'issue d'une étape d'information 103, le pilote du véhicule 1 est libre de choisir le positionnement qu'il veut adopter.

Bien entendu, pondérer à la baisse une note de courtoisie associée à un positionnement PV0, PV1, PV2 non préféré est équivalant au fait de rehausser une note de courtoisie associée à un positionnement PV0, PV1, PV2 plus préférable. En effet, les effets techniques associés aux notes de courtoisie sont basés sur la différence relative des notes de courtoisie entre elles.

Lors d'une session de conduite, les étapes d'identification 101, de détermination 102 et d'information 103 sont exécutées plusieurs fois.

Une session de conduite correspond par exemple à un temps de roulage depuis un démarrage du véhicule jusqu'à un arrêt complet du véhicule.

Une session de conduite correspond par exemple à une période de temps prédéfinie : une journée, une semaine, un mois, un an...

Une session de conduite correspond par exemple à une durée de roulage telle qu'une heure, vingt-quatre heures, ou à une distance parcourue telle que cent kilomètres, cing cents kilomètres, mille kilomètres...

Une session de conduite correspond par exemple à trajet entre le départ et l'arrivée à destination selon un itinéraire prédéfini.

A la fin d'une session de conduite, le calculateur 2, en fonction des informations faites au pilote du véhicule au cours des étapes d'information 103 et des positionnements adoptés par le pilote du véhicule 1 à l'issue des étapes d'information 103, ainsi que des notes de courtoisie associées audit positionnements adoptés, calcule un score de courtoisie et restitue ledit score de courtoisie au pilote du véhicule, selon une étape de restitution 104.

Le score de courtoisie est par exemple la somme des notes de courtoisie associées audit positionnements adoptés par le pilote.

Un coefficient multiplicateur peut être appliqué à chaque note de courtoisie avant d'en faire la somme en fonction d'une donnée contextuelle, par exemple la météo, l'heure, le trafic routier, le lieu, l'expérience du conducteur, des préférences du conducteur.

Le score de courtoisie est par exemple restitué sous la forme d'un indicateur sur une jauge, indiquant le score de courtoisie obtenu par le pilote relativement à un score maximum basé sur les notes de courtoisie associées aux positionnements préférés fournis selon les étapes d'information 103.

## Revendications

1. Procédé pour aider au choix du positionnement d'un véhicule (1) suivant un itinéraire principal (P) sur une route (10), la route (10) comprenant au moins un tronçon de route (11) comportant une pluralité de voies de circulation (V0, V1, V2) de même sens de circulation (SC), le véhicule (1) comprenant un calculateur (2), le procédé comprenant les étapes suivantes :
- une étape d'identification (101) dans laquelle le calculateur (2) identifie sur le tronçon de route (11), une portion de route (12) à choix multiple de positionnements, des positionnements (PVO, PV1, PV2) étant chacun associés à des voies de circulation (V0, V1, V2) distinctes permettant de suivre l'itinéraire principal (P), un des positionnements (PV2) étant associé à une voie de circulation (V2) permettant en outre de suivre un itinéraire alternatif (A), la route (10) comprenant une zone de transition (15) adjacente à la portion de route (12) à choix multiple de positionnements, dans laquelle un changement de voie de circulation du véhicule (1) est autorisé,
- une étape de détermination (102) dans laquelle le calculateur (2) localise le véhicule (1) par rapport à la zone de transition (15) et détermine en fonction d'une localisation du véhicule (1) par rapport à la zone de transition (15), si un changement de voie de circulation du véhicule (1) dans la zone de transition (15) est possible,
**caractérisé en ce que** ledit procédé comporte
- une étape d'information (103) dans laquelle, si un changement de voie de circulation du véhicule (1) dans la zone de transition (15) est possible, le calculateur (2) informe un pilote du véhicule que plusieurs positionnements (PVO, PV1, PV2) sont possibles, un positionnement préféré parmi les positionnements (PVO, PV1, PV2) possibles permettant de laisser libre le positionnement (PV2) permettant en outre de suivre un itinéraire alternatif (A), le calculateur (2) n'informant pas le pilote du véhicule que plusieurs positionnements (PVO, PV1, PV2) sont possibles, sinon.

2. Procédé selon la revendication précédente, le calculateur (2) n'informant le pilote que pour les positionnements (PVO, PV1, PV2) associés à une voie de circulation (V0, V1, V2) du véhicule (1) et aux voies de circulation (V0, V1, V2) adjacentes à ladite voie de circulation du véhicule (1).

3. Procédé selon la revendication précédente, la zone de transition (15) étant délimitée par une entrée (E) et une sortie (S) selon le sens de circulation (SC), un changement de voie de circulation du véhicule (1) dans la zone de transition (15) étant possible après franchissement du véhicule (1) de l'entrée (E) de la zone de transition (15) , et à une distance de sortie (DS) du véhicule (1) par rapport à la sortie (S) de la zone de transition (15), supérieure à un seuil limite de changement prédéfini, le changement de voie de circulation du véhicule (1) n'étant pas possible sinon.

4. Procédé selon l'une quelconque des revendications précédentes, le calculateur (2) étant apte à détecter des cibles (5) localisées dans l'environnement du véhicule, le calculateur (2) prenant en outre en compte des cibles (5) détectées pour déterminer si un changement de voie de circulation du véhicule (1) dans la zone de transition (15) est possible, selon l'étape de détermination (102).

5. Procédé selon l'une quelconque des revendications précédentes, chaque positionnement (PVO, PV1, PV2) étant associé à une note de courtoisie, un positionnement (PVO, PV1, PV2) permettant de suivre uniquement l'itinéraire principal (P) ayant une note de courtoisie supérieure au positionnement (PV2) permettant en outre de suivre un itinéraire alternatif (A), le positionnement préféré étant le positionnement (PVO, PV1, PV2) dont la note de courtoisie est la plus haute.

6. Procédé selon la revendication précédente, la note de courtoisie associée à un positionnement (PVO, PV1, PV2) étant en outre pondérée à la baisse lorsque ledit positionnement (PVO, PV1, PV2) engendre un changement de voie de circulation du véhicule (1).

7. Procédé selon l'une quelconque des revendications 5 ou 6, le calculateur (2) étant apte à détecter des cibles (5) localisées dans l'environnement du véhicule, la note de courtoisie associée à un positionnement (PV2) permettant en outre de suivre un itinéraire alternatif (A) étant pondérée à la baisse lorsque le calculateur (2) détecte, dans l'environnement du véhicule (1), une cible (5) signalant une intention de suivre ledit itinéraire alternatif (A).

8. Procédé selon l'une quelconque des revendications 5 à 7, les étapes d'identification (101), de détermination (102) et d'information (103) étant exécutées plusieurs fois, le procédé comprenant en outre une étape de restitution (104), dans laquelle le calculateur (2), en fonction des informations faites au pilote du véhicule au cours des étapes d'information (103), des positionnements adoptés par le pilote du véhicule (1) à l'issue des étapes d'information (103) et des notes de courtoisie associées audit positionnements adoptés, calcule un score de courtoisie et restitue ledit score de courtoisie au pilote du véhicule.

9. Produit programme d'ordinateur comprenant les instructions de programme mettant en oeuvre les étapes du procédé pour aider au choix du positionnement d'un véhicule selon l'une quelconque des revendications précédentes, lorsque les instructions de programme sont exécutées par un ordinateur.

10. Support lisible d'informations sur lequel est mémorisé le produit programme d'ordinateur selon la revendication précédente.

## Patentansprüche

1. Verfahren zur Unterstützung bei der Wahl der Positionierung eines Fahrzeugs (1) gemäß einer Hauptstrecke (P) auf einer Straße (10), wobei die Straße (10) mindestens einen Straßenabschnitt (11) enthält, der eine Vielzahl von Fahrspuren (V0, V1, V2) gleicher Fahrtrichtung (SC) aufweist, wobei das Fahrzeug (1) einen Rechner (2) enthält, wobei das Verfahren die folgenden Schritte enthält:
- einen Erkennungsschritt (101), in dem der Rechner (2) auf dem Straßenabschnitt (11) einen Straßenteil (12) mit Mehrfachauswahl von Positionierungen erkennt, wobei Positionierungen (PVO, PV1, PV2) je unterschiedlichen Fahrspuren (V0, V1, V2) zugeordnet sind, die es ermöglichen, der Hauptstrecke (P) zu folgen, wobei eine der Positionierungen (PV2) einer Fahrspur (V2) zugeordnet ist, die es außerdem ermöglicht, einer alternativen Strecke (A) zu folgen, wobei die Straße (10) einen dem Straßenabschnitt (12) mit Mehrfachauswahl von Positionierungen benachbarten Übergangsbereich (15) enthält, in dem ein Fahrspurwechsel des Fahrzeugs (1) erlaubt ist,
- einen Bestimmungsschritt (102), in dem der Rechner (2) das Fahrzeug (1) bezüglich des Übergangsbereichs (15) lokalisiert und abhängig von einer Lokalisierung des Fahrzeugs (1) bezüglich des Übergangsbereichs (15) bestimmt, ob ein Fahrspurwechsel des Fahrzeugs (1) im Übergangsbereich (15) möglich ist,
**dadurch gekennzeichnet, dass** das Verfahren aufweist
- einen Informationsschritt (103), in dem, wenn ein Fahrspurwechsel des Fahrzeugs (1) im Übergangsbereich (15) möglich ist, der Rechner (2) einen Fahrer des Fahrzeugs informiert, dass mehrere Positionierungen (PVO, PV1, PV2) möglich sind, wobei eine bevorzugte Positionierung unter den möglichen Positionierungen (PVO, PV1, PV2) es erlaubt, die Positionierung (PV2) frei zu lassen, die es außerdem erlaubt, einer alternativen Strecke (A) zu folgen, wobei andernfalls der Rechner (2) nicht den Fahrer des Fahrzeugs informiert, dass mehrere Positionierungen (PVO, PV1, PV2) möglich sind.

2. Verfahren nach dem vorhergehenden Anspruch, wobei der Rechner (2) den Fahrer nur für die Positionierungen (PVO, PV1, PV2) informiert, die einer Fahrspur (V0, V1, V2) des Fahrzeugs (1) und den der Fahrspur des Fahrzeugs (1) benachbarten Fahrspuren (V0, V1, V2) zugeordnet sind.

3. Verfahren nach dem vorhergehenden Anspruch, wobei der Übergangsbereich (15) von einem Eintritt (E) und einem Austritt (S) gemäß der Fahrtrichtung (SC) begrenzt wird, wobei ein Fahrspurwechsel des Fahrzeugs (1) im Übergangsbereich (15) nach dem Durchfahren des Eintritts (E) in den Übergangsbereich (15) durch das Fahrzeug (1), und in einem Austrittsabstand (DS) des Fahrzeugs (1) bezüglich des Austritts (S) aus dem Übergangsbereich (15), größer als eine vordefinierte Wechselgrenzschwelle, möglich ist, wobei der Fahrspurwechsel des Fahrzeugs (1) andernfalls nicht möglich ist.

4. Verfahren nach einem der vorhergehenden Ansprüche, wobei der Rechner (2) in der Umgebung des Fahrzeugs lokalisierte Ziele (5) erkennen kann, wobei der Rechner (2) außerdem erkannte Ziele (5) berücksichtigt, um zu bestimmen, ob ein Fahrspurwechsel des Fahrzeugs (1) in den Übergangsbereich (15) möglich ist, gemäß dem Bestimmungsschritt (102).

5. Verfahren nach einem der vorhergehenden Ansprüche, wobei jede Positionierung (PVO, PV1, PV2) einer Höflichkeitsnote zugeordnet ist, wobei eine Positionierung (PVO, PV1, PV2), die es ermöglicht, nur der Hauptstrecke (P) zu folgen, eine höhere Höflichkeitsnote hat als die Positionierung (PV2), die es außerdem ermöglicht, einer alternativen Strecke (A) zu folgen, wobei die bevorzugte Positionierung die Positionierung (PVO, PV1, PV2) ist, deren Höflichkeitsnote die höchste ist.

6. Verfahren nach dem vorhergehenden Anspruch, wobei die einer Positionierung (PVO, PV1, PV2) zugeordnete Höflichkeitsnote außerdem nach unten gewichtet wird, wenn die Positionierung (PVO, PV1, PV2) einen Fahrspurwechsel des Fahrzeugs (1) erzeugt.

7. Verfahren nach einem der Ansprüche 5 oder 6, wobei der Rechner (2) fähig ist, in der Umgebung des Fahrzeugs lokalisierte Ziele (5) zu erkennen, wobei die einer Positionierung (PV2), die es außerdem ermöglicht, einer alternativen Strecke (A) zu folgen, zugeordnete Höflichkeitsnote nach unten gewichtet wird, wenn der Rechner (2) in der Umgebung des Fahrzeugs (1) ein Ziel (5) erkennt, das eine Absicht signalisiert, der alternativen Strecke (A) zu folgen.

8. Verfahren nach einem der Ansprüche 5 bis 7, wobei die Schritte der Erkennung (101), der Bestimmung (102) und der Information (103) mehrmals ausgeführt werden, wobei das Verfahren außerdem einen Übergabeschritt (104) enthält, in dem der Rechner (2) abhängig von den dem Fahrer des Fahrzeugs (1) während der Informationsschritte (103) vermittelten Informationen, den vom Fahrer des Fahrzeugs (1) nach den Informationsschritten (103) eingenommenen Positionierungen und den den eingenommenen Positionierungen zugeordneten Höflichkeitsnoten eine Höflichkeitswertung berechnet und die Höflichkeitswertung an den Fahrer des Fahrzeugs übergibt.

9. Computerprogrammprodukt, das die Programmanweisungen enthält, die die Schritte des Verfahrens durchführen, um die Wahl der Positionierung eines Fahrzeugs nach einem der vorhergehenden Ansprüche zu unterstützen, wenn die Programmanweisungen von einem Computer ausgeführt werden.

10. Lesbarer Informationsträger, auf dem das Computerprogrammprodukt nach dem vorhergehenden Anspruch gespeichert ist.

## Claims

1. Method for assisting in choosing the positioning of a vehicle (1) following a main route (P) on a road (10), the road (10) comprising at least one road section (11) comprising a plurality of traffic lanes (V0, V1, V2) in which the direction of traffic flow (SC) is the same, the vehicle (1) comprising a computer (2), the method comprising the following steps:
- an identifying step (101) in which the computer (2) identifies, on the road section (11), a multi-positioning-choice road segment (12), positionings (PVO, PV1, PV2) each being associated with distinct traffic lanes (V0, V1, V2) allowing the main route (P) to be followed, one of the positionings (PV2) being associated with a traffic lane (V2) further allowing an alternative route (A) to be followed, the road (10) comprising a transition zone (15) adjacent to the multi-positioning-choice road segment (12), in which transition zone the vehicle (1) is permitted to change traffic lane,
- a determining step (102) in which the computer (2) locates the vehicle (1) with respect to the transition zone (15) and determines, depending on a location of the vehicle (1) with respect to the transition zone (15), whether it is possible for the vehicle (1) to change traffic lane in the transition zone (15),
**characterized in that** said method comprises
- an informing step (103) in which, if it is possible for the vehicle (1) to change traffic lane in the transition zone (15), the computer (2) informs a driver of the vehicle that a plurality of positionings (PVO, PV1, PV2) are possible, a preferred positioning among the possible positionings (PVO, PV1, PV2) making it possible to leave free the positioning (PV2) further allowing an alternative route (A) to be followed, the computer (2) otherwise not informing the driver of the vehicle that a plurality of positionings (PVO, PV1, PV2) are possible.

2. Method according to the preceding claim, the computer (2) informing the driver only in respect of the positionings (PVO, PV1, PV2) associated with a traffic lane (V0, V1, V2) of the vehicle (1) and with the traffic lanes (V0, V1, V2) adjacent to said traffic lane of the vehicle (1).

3. Method according to the preceding claim, the transition zone (15) being bounded by an entry (E) and an exit (S) in the direction of traffic flow (SC), it being possible for the vehicle (1) to change traffic lane in the transition zone (15), after the vehicle (1) has passed the entry (E) of the transition zone (15), and at an exit distance (DS) of the vehicle (1) from the exit (S) of the transition zone (15) larger than a predefined change limit, it otherwise not being possible for the vehicle (1) to change traffic lane.

4. Method according to any one of the preceding claims, the computer (2) being able to detect targets (5) located in the environment of the vehicle, the computer (2) further taking into account detected targets (5) when determining, in the determining step (102), whether it is possible for the vehicle (1) to change traffic lane in the transition zone (15).

5. Method according to any one of the preceding claims, each positioning (PVO, PV1, PV2) being associated with a courtesy score, a positioning (PVO, PV1, PV2) allowing only the main route (P) to be followed having a courtesy score higher than the positioning (PV2) further allowing an alternative route (A) to be followed, the preferred positioning being the positioning (PVO, PV1, PV2) the courtesy score of which is highest.

6. Method according to the preceding claim, the courtesy score associated with a positioning (PVO, PV1, PV2) further being weighted downward when said positioning (PVO, PV1, PV2) would require the vehicle (1) to change traffic lane.

7. Method according to either one of Claims 5 and 6, the computer (2) being able to detect targets (5) located in the environment of the vehicle, the courtesy score associated with a positioning (PV2) further allowing an alternative route (A) to be followed being weighted downward when the computer (2) detects, in the environment of the vehicle (1), a target (5) signalling an intention to follow said alternative route (A).

8. Method according to any one of Claims 5 to 7, the identifying, determining and informing steps (101, 102, 103) being executed a plurality of times, the method further comprising a rendering step (104), in which the computer (2), depending on the information given to the driver of the vehicle in the informing steps (103), on the positionings adopted by the driver of the vehicle (1) at the end of the informing steps (103) and on the courtesy scores associated with said adopted positionings, computes a courtesy rating and renders said courtesy rating to the driver of the vehicle.

9. Computer program product comprising program instructions implementing the steps of the method for assisting in choosing the positioning of a vehicle according to any one of the preceding claims, when the program instructions are executed by a computer.

10. Readable data medium on which is stored the computer program product according to the preceding claim.
